# EUROPÄISCHE PATENTSCHRIFT

(11) **EP 2 399 314 B1**
(45) Veröffentlichungstag und Bekanntmachung des Hinweises auf die Patenterteilung: **26.06.2013**
(21) Anmeldenummer: 10701329.4
(22) Anmeldetag: 27.01.2010
(51) Int. Cl.: H01M 8/04, H01M 8/06

(54) **BRENNSTOFFZELLENSYSTEM MIT WENIGSTENS EINER BRENNSTOFFZELLE**
FUEL CELL SYSTEM COMPRISING AT LEAST ONE FUEL CELL
SYSTÈME DE PILE À COMBUSTIBLE COMPORTANT AU MOINS UNE PILE À COMBUSTIBLE

(30) Priorität: 19.02.2009 DE 102009009674
(43) Veröffentlichungstag der Anmeldung: 28.12.2011
(73) Patentinhaber: Daimler AG, 70327 Stuttgart (DE)
(72) Erfinder: KONRAD, Gerhard, 89081 Ulm (DE); STERK, Felix, 88281 Schlier (DE)
(74) Vertreter: JENSEN & SON
(86) Internationale Anmeldenummer: PCT/EP2010/000474
(87) Internationale Veröffentlichungsnummer: WO 2010/094391

(56) Entgegenhaltungen:
- EP-A2- 0 430 017
- WO-A1-02/37590
- WO-A2-2004/079846
- DE-A1- 10 115 336
- DE-A1-102007 003 144
- US-A1- 2005 058 863

## Beschreibung

Die Erfindung betrifft ein Brennstoffzellensystem mit wenigstens einer Brennstoffzelle, nach der im Oberbegriff von Anspruch 1 näher definierten Art.

Ein gattungsgemäßes Brennstoffzellensystem wird durch die DE 10 2007 003 144 A1 beschrieben. Das dortige Brennstoffzellensystem umfasst eine Austauschvorrichtung, welche die beiden Funktionen "Kühlung" und "Befeuchtung" in sich kombiniert. Diese in der dortigen Schrift als Funktionseinheit bezeichnete Austauschvorrichtung lässt einen Stoffstrom von der Abluft der Brennstoffzelle zu der Zuluft zu der Brennstoffzelle zu, während gleichermaßen ein Wärmeaustausch von der durch eine Verdichtungsvorrichtung aufgeheizten Zuluft zu der vergleichsweise kühlen Abluft erfolgt.

Zum weiteren Stand der Technik wird auf die DE 101 15 336 A1 verwiesen. Auch diese zeigt ein Brennstoffzellensystem, wenngleich auch nicht mit einer Vorrichtung, welche der Funktionseinheit bzw. der Austauschvorrichtung der oben genannten Schrift vergleichbar ausgebildet ist. Allerdings beschäftigt sich die DE 101 15 336 A1 mit dem Umgang mit wasserstoffhaltigem Abgas, welches bei einer Kreislaufführung der Anodengase von Zeit zu Zeit aus dem Bereich des Anodenkreislaufs abgegeben werden muss. Es wird dazu vorgeschlagen, das wasserstoffhaltige Gas in den Bereich der Zuluft zu dem Kathodenbereich der Brennstoffzelle einzubringen, so dass dieses zusammen mit dem Sauerstoff der Zuluft an einem Katalysator, insbesondere an dem im Bereich der Kathode ohnehin vorhandenen Katalysator abreagiert.

Dieses Eindosieren von wasserstoffhaltigem Abgas aus dem Anodenbereich der Brennstoffzelle wirkt sich hinsichtlich der bei der Reaktion entwickelten Temperatur negativ auf die Konditionierung der Zuluft zu dem Kathodenbereich der Brennstoffzelle aus. Wird die Reaktion außerdem im Bereich des Katalysators an den Zellen selbst zugelassen, so wird hierdurch eine schnellere Alterung der Brennstoffzellen bewirkt. Der Aufbau hat somit den Nachteil, dass er in seiner Nutzung sehr eingeschränkt ist, insbesondere auch hinsichtlich der umsetzbaren Menge an wasserstoffhaltigem Abgas, um die oben genannten Nachteile nicht zu groß werden zu lassen. Die Anwendung ist daher mit entscheidenden Nachteilen behaftet und, aufgrund der mengenmäßigen Beschränkung des wasserstoffhaltigen Abgases, um die Nachteile zu minimieren, auf die Verwendung in einem Aufbau mit einem Anodenrezirkulationskreislauf eingeschränkt.

Es ist die Aufgabe der hier vorliegenden Erfindung, ein Brennstoffzellensystem dahingehend zu verbessern, dass eine Umsetzung von wasserstoffhaltigen Abgasen ermöglicht wird, welche in dem Brennstoffzellensystem nutzbringend eingesetzt werden kann, und welche die oben genannten Nachteile vermeidet.

Erfindungsgemäß wird diese Aufgabe durch die Merkmale im kennzeichnenden Teil von Anspruch 1 gelöst.

Durch die Anordnung von katalytischem Material in der Zuluftseite der Austauschvorrichtung wird das Abgas aus dem Anodenbereich in der Austauschvorrichtung umgesetzt. Dies hat den Vorteil, dass in der Austauschvorrichtung ein spezieller Katalysator eingesetzt werden kann, und somit eine Reaktion von Wasserstoff und Sauerstoff im Kathodenbereich unterbleibt. Damit können die negativen Einflüsse auf die Alterung der Brennstoffzelle vermieden werden. Außerdem erfolgt die Konditionierung der Zuluft zu dem Kathodenbereich der Brennstoffzelle in der Austauschvorrichtung. Somit hat die Zufuhr von Abgas aus dem Anodenbereich in die Austauschvorrichtung keinen oder keinen nicht-korrigierbaren Einfluss auf die von der Austauschvorrichtung zu dem Kathodenbereich der Brennstoffzelle strömende Zuluft. Im Bereich des katalytischen Materials mit einem Teil des Sauerstoffs aus der Zuluft reagierender Wasserstoff im Abgas aus dem Anodenbereich wird die Temperatur der Zuluft zwar erhöhen, da diese jedoch im Bereich der Austauschvorrichtung erst gekühlt wird, bevor sie zu dem Kathodenbereich weiterströmt, ist dies ohne negativen Einfluss auf die Konditionierung der Zuluft. Vielmehr wird die Wärme den Abluftstrom, welcher die Zuluft kühlt, weiter erwärmen. Dies kann von entscheidendem Vorteil sein, wenn beispielsweise die Wärme aus dem Abluftstrom noch anderweitig genutzt werden soll, oder wenn ein Austreten von flüssigem Wasser mit dem Abluftstrom aus dem Brennstoffzellensystem verhindert werden soll.

Außerdem entsteht bei der Umsetzung des wasserstoffhaltigen Abgases im Bereich des katalytischen Materials in der Austauschvorrichtung eine gewisse Menge an Wasser bzw. Wasserdampf. Dieser sorgt zusammen mit dem durch die Austauschvorrichtung von dem Abluftstrom auf den Zuluftstrom übertragenen Wasserdampf für eine Befeuchtung der Brennstoffzelle bzw. der in einer derartigen Brennstoffzelle typischerweise eingesetzten Polymerelektrolyt-Membranen (PE-Membranen), welche den Kathodenbereich vom Anodenbereich trennen und für die Funktion der Brennstoffzelle in an sich bekannter Art und Weise sorgen.

In einer besonders günstigen Ausgestaltung des erfindungsgemäßen Brennstoffzellensystems ist es dabei vorgesehen, dass die Zufuhr von Abgas aus dem Anodenbereich gesteuert und/oder geregelt erfolgt. Insbesondere beim Einsatz eines Brennstoffzellensystems mit einer Rezirkulation von Anodenabgas kann die zeitliche und/oder mengenmäßige Zufuhr von Abgas aus dem Anodenbereich in die Zuluftseite der Austauschvorrichtung in gewissen Grenzen gesteuert bzw. geregelt werden. Damit lässt sich in einem ungünstigen Zeitpunkt, in dem beispielsweise kein ausreichender Abluftstrom zur Verfügung steht, um die entstehende Wärme zu kühlen, die Zufuhr des Abgases in die Austauschvorrichtung verzögern. So können ungünstige Betriebszustände vermeiden und es kann eine verbesserte Betriebsführung für das Brennstoffzellensystem realisiert werden.

In einer weiteren besonders günstigen Ausgestaltung des erfindungsgemäßen Brennstoffzellensystems ist es ferner vorgesehen, dass der Austauschvorrichtung zuluftseitig ein Brennstoff, insbesondere Wasserstoff, zuführbar ist. Durch diese Zufuhr eines optionalen Brennstoffs, insbesondere des in dem Brennstoffzellensystem ohnehin vorhandenen Wasserstoffs, kann eine weitere Flexibilisierung des Brennstoffzellensystems erreicht werden. Eine derartige Zufuhr von weiterem Brennstoff in den zuluftseitigen Bereich der Austauschvorrichtung, und damit in den Bereich des katalytischen Materials, kann immer dann erfolgen, wenn eine höhere Feuchtigkeitsmenge benötigt wird, da der zugeführte Brennstoff mit dem Sauerstoff zu Wasserdampf reagiert. Außerdem kann eine solche optionale Zufuhr dann erfolgen, wenn eine größere Wärmemenge in dem Abluftstrom benötigt wird, beispielsweise bei einer Nutzung der Abwärme, oder zur Verdampfung einer größeren Menge an flüssigem Wasser in dem Abluftstrom, welches nicht in flüssiger Form aus dem System gelangen soll.

In einer besonders günstigen und vorteilhaften Weiterbildung des erfindungsgemäßen Brennstoffzellensystems ist es ferner vorgesehen, die Zuluft über einen stromabwärts der Austauschvorrichtung angeordneten Verdichter zuzuführen, wobei der Verdichter zumindest unterstützend durch eine Turbine antreibbar ist, welche von der Abluft stromabwärts der Austauschvorrichtung durchströmt ist. Dieser Aufbau mit einer Turbine, welche in der Art eines bei Verbrennungskraftmaschinen üblichen Turboladers den Verdichter zumindest unterstützend antreibt, erlaubt es, die Abwärme in dem Abluftstrom zusammen mit der restlichen Druckenergie zu nutzen. Wird durch den erfindungsgemäßen Aufbau des Brennstoffzellensystems nun zusätzliche Wärme in den Abluftstrom eingetragen, so kann diese in der Turbine wiederum in mechanische Energie zurückgewandelt werden, so dass das Brennstoffzellensystem insgesamt weniger parasitären Energieverbrauch aufweist, und damit einen höheren Wirkungsgrad zulässt.

Das erfindungsgemäße Brennstoffzellensystem in allen sein dargelegten Varianten erlaubt somit einen einfachen, kompakten und damit auch kostengünstigen Aufbau, bei einer für die Lebensdauer und den erzielbaren Wirkungsgrad idealen Ausgestaltung. Das erfindungsgemäße Brennstoffzellensystem eignet sich daher besonders gut zur Verwendung in einem Fortbewegungsmittel, und hier zur Erzeugung von Leistung für den Antrieb und/oder elektrische Nebenverbraucher in dem Fortbewegungsmittel. Dabei ist unter einem Fortbewegungsmittel im Sinne der hier vorliegenden Erfindung jede Art von Fortbewegungsmittel zu Lande, zu Wasser oder in der Luft zu verstehen, wobei ein besonderes Augenmerk sicherlich in der Nutzung derartiger Brennstoffzellensysteme für schienenlose Kraftfahrzeuge liegt, ohne dass die Verwendung eines erfindungsgemäßen Brennstoffzellensystems hierauf eingeschränkt wäre.

Weitere vorteilhafte Ausgestaltungen des erfindungsgemäßen Brennstoffzellensystems ergeben sich aus den restlichen Unteransprüchen und werden anhand der Ausführungsbeispiele deutlich, welche nachfolgend unter Bezugnahme auf die Figuren näher beschrieben werden.

Dabei zeigen:
- Fig. 1: eine erste mögliche Ausführungsform des erfindungsgemäßen Brennstoffzellensystems; und
- Fig. 2: eine weitere alternative Ausführungsform des erfindungsgemäßen Brennstoffzellensystems.

Die Darstellung in den folgenden Figuren zeigt von dem an sich sehr komplexen Brennstoffzellensystem lediglich die für das Verständnis der hier vorliegenden Erfindung notwendigen Bauteile in einer stark schematisierten Darstellung. Es sollte dabei für das Brennstoffzellensystem selbstverständlich sein, dass auch weitere Komponenten, wie beispielsweise ein Kühlkreislauf und dergleichen in dem Brennstoffzellensystem vorgesehen sind, obwohl diese in den nachfolgend dargestellten Figuren keine Berücksichtigung finden.

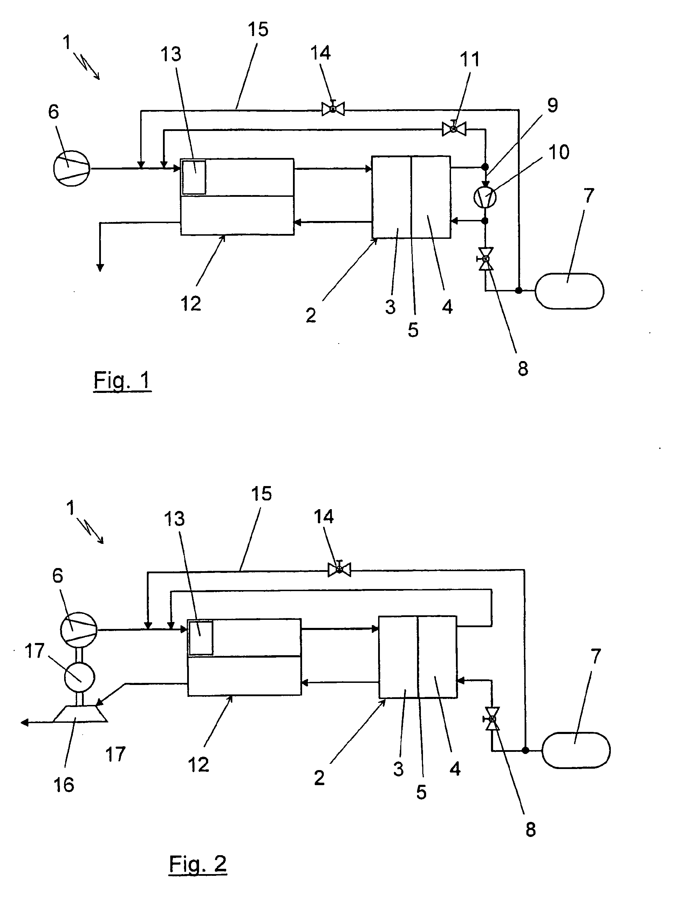

In Figur 1 ist nun ein Brennstoffzellensystem 1 mit einer Brennstoffzelle 2 dargestellt. Die Brennstoffzelle 2 soll dabei als in üblicher Art und Weise aufgebaute Brennstoffzelle 2 aus einem Stapel von Einzelzellen bestehen. In der Brennstoffzelle 2 ist ein Kathodenbereich 3 und ein Anodenbereich 4 ausgebildet, welche in dem hier dargestellten Ausführungsbeispiel durch eine PE-Membran 5 voneinander getrennt sein sollen. In dem in Figur 1 dargestellten Ausführungsbeispiel wird dem Kathodenbereich 3 über einen Verdichter 6 ein Zuluftstrom zugeführt. Der Verdichter 6 kann dabei beispielsweise als Schraubenverdichter oder als Strömungsverdichter ausgeführt sein, wie dies bei Brennstoffzellensystemen üblich ist. Grundsätzlich sind jedoch auch andere Möglichkeiten zum Verdichten des zugeführten Luftstroms, beispielsweise durch eine Kolbenmaschine oder dergleichen, denkbar. Der dem Kathodenbereich 3 zugeführte Zuluftstrom reagiert in der Brennstoffzelle 2 mit dem Anodenbereich 4 zugeführten Wasserstoff zu Wasser, wobei elektrische Leistung frei wird. Dieses an sich bekannte Prinzip der Brennstoffzelle 2 spielt für die vorliegende Erfindung nur eine untergeordnete Rolle, weshalb dies nicht näher erläutert werden soll.

Dem Anodenbereich 4 wird in dem hier dargestellten Ausführungsbeispiel Wasserstoff aus einer Wasserstoffspeichereinrichtung 7, beispielsweise einem Druckgasspeicher und/oder einem Hydridspeicher zugeführt. Prinzipiell wäre es auch denkbar, die Brennstoffzelle 2 mit einem wasserstoffhaltigen Gas zu versorgen, welches beispielsweise aus kohlenwasserstoffhaltigen Ausgangsstoffen im Bereich des Brennstoffzellensystems generiert wird.

In dem Ausführungsbeispiel der Figur 1 wird der Wasserstoff aus der Wasserstoffspeichereinrichtung 7 über eine hier nur schematisch angedeutete Dosiervorrichtung 8 in den Anodenbereich 4 geleitet. Das aus dem Anodenbereich 4 abströmende Abgas, welches im Allgemeinen immer noch eine vergleichsweise große Menge an Wasserstoff enthält, wird über eine Rezirkulationsleitung 9 sowie eine Rezirkulationsfördereinrichtung 10 in den Anodenbereich 4 zurückgeführt. Im Bereich dieser Rezirkulation wird dabei frischer aus der Wasserstoffspeichereinrichtung 7 stammender Wasserstoff zugeführt, so dass im Anodenbereich 4 immer eine ausreichende Menge an Wasserstoff zur Verfügung steht. Der Aufbau des Anodenbereichs 4 der Brennstoffzelle 2 mit der Rezirkulationsleitung 9 und der Rezirkulationsfördereinrichtung 10 ist dabei an sich bekannt und üblich. Als Rezirkülationsfördereinrichtung 10 kann z. B. eine Gasstrahlpumpe zum Einsatz kommen, welche von dem frischen aus der Wasserstoffspeichereinrichtung 7 stammenden Wasserstoff angetrieben wird. Alternativ dazu wäre auch ein Rezirkulationsgebläse als Rezirkulationsfördereinrichtung 10 denkbar. Selbstverständlich sind auch Kombinationen dieser verschiedenen Fördereinrichtungen möglich, welche ebenfalls unter die Definition der Rezirkulationsfördereinrichtung 10 gemäß der hier vorliegenden Beschreibung fallen sollen. Außerdem ist es beim Einsatz einer Rezirkulation von Anodenabgas bekannt, dass sich im Bereich der Rezirkulationsleitung 9 mit der Zeit inerte Gase, wie beispielsweise Stickstoff ansammeln, welche durch die PE-Membran 5 hindurch von dem Kathodenbereich 3 in den Anodenbereich 4 gelangen. Um in dem Anodenbereich 4 weiterhin eine ausreichende Konzentration an Wasserstoff zur Verfügung stellen zu können, ist es daher notwendig, das Abgas des Anodenbereichs 4 in der Rezirkulationsleitung 9 von Zeit zu Zeit abzulassen. Hierfür ist in dem Ausführungsbeispiel gemäß Figur 1 ein Ablassventil 11 vorgesehen, durch welches das Abgas aus dem Anodenbereich 4 von Zeit zu Zeit abgeführt werden kann. Dieser Vorgang wird häufig auch als "Purge" bezeichnet. Das Abgas enthält dabei neben den inerten Gasen immer auch eine entsprechende Menge an Restwasserstoff.

Die von dem Verdichter 6 zum Kathodenbereich 3 strömende Zuluft durchströmt in dem Aufbau des Brennstoffzellensystems 1 gemäß Figur 1 eine Austauschvorrichtung 12, in welcher die Konditionierung der Zuluft erfolgt. Typischerweise wird die Zuluft nach dem Verdichter 6 eine vergleichsweise hohe Temperatur aufweisen. Da die Brennstoffzelle 2 und hier insbesondere die PE-Membranen 5 der Brennstoffzelle 2 gegen zu hohe Temperatur und zu trockene Gase sehr empfindlich reagieren, wird die Zuluft in der Austauschvorrichtung 12 entsprechend gekühlt und befeuchtet. Zur Kühlung und Befeuchtung dient dabei der aus dem Kathodenbereich 3 kommende Abluftstrom. Dieser strömt ebenfalls durch die Austauschvorrichtung 12. Die Austauschvorrichtung 12 ist so aufgebaut, dass sie die beiden Stoffströme der Zuluft und der Abluft grundsätzlich voneinander trennt. Dies kann beispielsweise dadurch erfolgen, dass einer der Stoffströme durch Hohlfasern strömt, während der andere der Stoffströme die Hohlfasern umströmt. Außerdem wäre es denkbar, die Austauschvorrichtung 12 in der Art eines Plattenreaktors aufzubauen, bei dem die beiden Stoffströme durch flächige Platten beziehungsweise Membranen voneinander getrennt sind.

Als besonders günstig hat es sich erwiesen, die Austauschvorrichtung 12 in Form eines Wabenkörpers aufzubauen, wie er beispielsweise bei Abgaskatalysatoren von Kraftfahrzeugen üblich ist. Durch eine entsprechende Ausgestaltung des Wabenkörpers kann erreicht werden, dass der Zuluftstrom und der Abluftstrom in verschiedenen benachbarten Kanälen des Wabenkörpers strömen. Dabei ist grundsätzlich jede Art der Durchströmung denkbar, beispielsweise eine Gleichstromführung oder eine Kreuzstromführung der beiden Stoffströme. Als besonders geeignet hat es sich jedoch herausgestellt, die Stoffströme im Gegenstrom oder einer Strömungsführung mit hohem Gegenstromanteil durch die Austauschvorrichtung 12 zu führen. In der Austauschvorrichtung 12 kommt es nun zu einem Wärmeaustausch von dem heißen Zuluftstrom auf den kalten Abluftstrom des Kathodenbereichs 3. Durch eine Gegenstromführung wird erreicht, dass der kühlste Abluftstrom in wärmeleitendem Kontakt mit dem bereits am stärksten abgekühlten Teil des Zuluftstroms steht, während der bereits relativ stark aufgewärmte Abluftstrom den noch sehr heißen Zuluftstrom beim Einströmen in die Austauschvorrichtung 12 kühlt. Dadurch wird eine sehr gute Abkühlung des Zuluftstroms erreicht. Außerdem erlaubt das Material der Austauschvorrichtung, beispielsweise temperaturbeständigen Membranen, porösen Keramiken, Zeolithe oder dergleichen einen Durchtritt von Wasserdampf aus dem sehr feuchten Abluftstrom des Kathodenbereichs 3, welcher das in der Brennstoffzelle 2 entstehende Produktwasser mit sich führt, in den Bereich des sehr trockenen Zuluftstroms zum Kathodenbereich 3. Dadurch wird der Zuluftstrom entsprechend befeuchtet, was sich positiv auf die Funktion und die Lebensdauer der PE-Membranen 5 im Bereich der Brennstoffzelle 2 auswirkt. Soweit der Aufbau und die Funktion der auch aus der eingangs bereits genannten DE 10 2007 003 144 A1 bekannten Austauschvorrichtung 12.

In dem hier vorliegenden Ausführungsbeispiel weist die Austauschvorrichtung 12 zusätzlich zu ihrem Aufbau gemäß dem Stand der Technik ein katalytisches Material auf. Dieses katalytische Material, welches in der Darstellung durch den Bereich 13 symbolisiert sein soll, dient der Reaktion von Wasserstoff mit dem Sauerstoff in der Zuluft. Der Wasserstoff stammt dabei aus der Rezirkulationsleitung 9 um den Anodenbereich 4 der Brennstoffzelle 2. Er wird wie bereits erwähnt von Zeit zu Zeit über das Ablassventil 11 abgelassen. Dieses wasserstoffhaltige Abgas, welches auch als Purgegas bezeichnet wird, gelangt nun zuluftseitig in die Austauschvorrichtung 12. Das Abgas beziehungsweise der in dem Abgas enthaltene Wasserstoff kann dort im Bereich des katalytischen Materials 13 mit einem Teil des Sauerstoffs in der Zuluft reagieren. Dabei entstehen Wärme und Wasser in Form von Wasserdampf. Der Wasserdampf ist hier besonders vorteilhaft, da er die Befeuchtung des Zuluftstroms und damit die Befeuchtung des Kathodenbereichs 3 der Brennstoffzelle 2 unterstützt. Die entstehende Wärme ist im Bereich der Zuluft nicht gewollt. Durch den Aufbau der Austauschvorrichtung 12 kann diese jedoch direkt auf den Abluftstrom aus dem Kathodenbereich 3 der Brennstoffzelle 2 übertragen werden und erhöht dessen Temperatur gegenüber einer Austauschvorrichtung 12 ohne das katalytische Material und die Zuführung von Abgas aus dem Anodenbereich 4 zusätzlich. Bei der Abgabe der Abluft an die Umgebung stellt dies jedoch keinen Nachteil dar, da hier ohnehin eine vergleichsweise warme Abluft gewünscht ist, um das in der Abluft immer noch enthaltene Wasser in Form von Wasserdampf an die Umgebung abzugeben und somit den Austritt von flüssigem Wasser zusammen mit der Abluft zu verhindern.

Das katalytische Material 13 kann zuluftseitig in der Austauschvorrichtung 12 beispielsweise in Form einer Schüttung von katalytisch aktiven Teilchen eingebracht werden. Besonders günstig ist es jedoch, wenn die Austauschvorrichtung 12 in ihrem zuluftseitigen Bereich mit dem katalytischen Material 13 beschichtet ist. Dabei ist es grundsätzlich denkbar, die gesamte zuluftseitige Fläche der Austauschvorrichtung 12 mit dem katalytischen Material 13 zu beschichten. Dabei ist lediglich darauf zu achten, dass die Beschichtung mit dem katalytischen Material 13 die Übertragung des Wasserdampfs von der Abluft auf die Zuluft nicht behindert. Dies ist jedoch über eine entsprechende Porengröße oder dergleichen in der Beschichtung mit katalytischem Material 13 zu erreichen. Alternativ dazu kann es jedoch auch vorgesehen sein, dass das katalytische Material 13 nur in dem stromaufwärts liegenden zuluftseitigen Bereich der Austauschvorrichtung 12, also in dem Bereich, in dem die Zuluft vom Verdichter 6 in die Austauschvorrichtung 12 einströmt, angeordnet ist. Unter dem Bereich ist dabei ein gewisser Abschnitt der Zuluftseite der Austauschvorrichtung 12 zu verstehen, beispielsweise ein Bereich von ca. 1/8 bis einem 1/4 der Austauschfläche der Austauschvorrichtung 12. Bei einem solchen Aufbau wäre es dann denkbar, dass im Bereich des katalytischen Materials 13 auf einen Stoffaustausch zwischen den beiden Strömen verzichtet werden kann. Der verbleibende Bereich der Austauschfläche würde ausreichen, um eine entsprechend große Menge an Wasserdampf von der Abluft auf die Zuluft zu übertragen. Der Bereich mit dem katalytischen Material 13 würde dann lediglich der katalytischen Abreaktion des in dem Abgas des Anodenbereichs 4 vorhandenen Wasserstoffs dienen sowie der Übertragung der dabei entstehenden Wärme auf den aus der Austauschvorrichtung 12 abströmenden Abluftstrom.

Zusätzlich kann es vorgesehen sein, dass der Austauschvorrichtung 12 zuluftseitig ein weiterer Brennstoff zugeführt wird. Bei in dem Brennstoffzellensystem 1 ohnehin vorhandenem Wasserstoff könnte dies insbesondere Wasserstoff sein. Es ist jedoch auch denkbar, einen Kohlenwasserstoff oder dergleichen zuzuführen, falls dieser in dem Brennstoffzellensystem 1 verfügbar wäre. Die Zufuhr des zusätzlichen Wasserstoffs erfolgt in dem hier dargestellten Ausführungsbeispiel des Brennstoffzellensystems 1 aus dem Bereich der Wasserstoffspeichereinrichtung 7 über eine Dosiereinrichtung 14 sowie ein entsprechendes Leitungselement 15. Der optionale Wasserstoff kann wie auch das Abgas aus dem Anodenbereich 4, entweder in die Zuleitung der Zuluft vor der Austauschvorrichtung 12 eingebracht werden, wie dies durch die Figur 1 prinzipiell angedeutet ist. Alternativ dazu wäre es selbstverständlich auch denkbar, das Abgas und/oder den Wasserstoff direkt in die Austauschvorrichtung 12, und hier insbesondere im Bereich des katalytischen Materials 13 einzubringen. Der zusätzliche Wasserstoff kann nun genutzt werden, um im Bereich des katalytischen Materials 13 zusätzlichen Wasserdampf zu erzeugen. Dieser zusätzliche Wasserdampf kann in bestimmten Betriebszuständen eingesetzt werden, um die Befeuchtung des Zuluftstroms zu verbessern, und damit um einem Austrocknen der PE-Membranen 5 der Brennstoffzelle 2 vorzubeugen. Alternativ dazu kann es auch vorgesehen sein, über die optionale zusätzliche Zufuhr von Wasserstoff die in der Austauschvorrichtung 12 entstehende Wärme entsprechend zu beeinflussen, so dass die Abluft in bestimmten Situationen beispielsweise gezielt erwärmt werden kann, um in ihr vorhandene Abwärme entsprechend zu nutzen und/oder den Austritt von flüssigem Wasser mit dem Abluftstrom zu vermeiden.

Der Aufbau des Brennstoffzellensystems 1 gemäß Figur 1 könnte außerdem über einen hier nicht dargestellten steuer- oder regelbaren Bypass um die Austauschvorrichtung 12 herum verfügen. Der Bypass könnte dabei sowohl zuluftseitig als auch abluftseitig angeordnet sein. Er würde es erlauben, einen Teil des Stoffstroms um die Austauschvorrichtung 12 herumzuführen, um diesen dann im Falle der Zuluft oder anderweitig noch benötigter Abluft nach der Austauschvorrichtung 12 wieder mit dem ursprünglichen Stoffstrom zu mischen. Dadurch kann sehr gezielt ein Befeuchtungsgrad eingestellt werden, oder es könnte in Situationen, in denen keine Befeuchtung gewünscht ist, eine solche vermieden werden. Da jedoch auch ein solcher Bypass aus dem Stand der Technik bei Befeuchtern bekannt ist, soll hierauf nicht näher eingegangen werden.

In Figur 2 ist nun eine alternative Ausführungsform des Brennstoffzellensystems 1 dargestellt. Dieselben Bauteile sind dabei mit denselben Bezugszeichen versehen und weisen eine vergleichbare Funktionalität auf, wie die analogen Bauteile in Figur 1. Daher wird nachfolgend nur auf die Unterschiede des Brennstoffzellensystems 1 gemäß Figur 2 gegenüber dem bisher beschriebenen eingegangen. Das Brennstoffzellensystem 1 der Figur 2 weist im wesentlichen zwei Unterschiede gegenüber dem Brennstoffzellensystem 1 der Figur 1 auf. Der erste Unterschied besteht darin, dass das Abgas aus dem Anodenbereich 4 nicht im Kreislauf geführt wird, sondern dass dieses Abgas direkt zuluftseitig in die Austauschvorrichtung 12 einströmt. Die Brennstoffzelle 2 wird in dem Ausführungsbeispiel der Figur 2 also nicht mit einem Anodenkreislauf betrieben, sondern mit einer Anode, welche lediglich von Wasserstoff durchströmt wird, wobei ein gewisser Überschuss an Wasserstoff als Abgas aus dem Anodenbereich 4 wieder abströmt. Dieser Aufbau, welcher aus dem Stand der Technik ebenfalls bekannt ist, wird im Allgemeinen mit einer Aufteilung des Anodenbereichs in verschiedene aktive Teilbereiche kombiniert, wobei die in Strömungsrichtung des Wasserstoffs aufeinanderfolgende Teilbereiche abnehmende aktive Flächen aufweisen, so dass der verbleibende Wasserstoffstrom weitestgehend umgesetzt werden kann, ohne ungenutzte aktive Fläche vorhalten zu müssen. Bei der Verwendung eines solchen kaskadierten Anodenbereichs 4 ist es bei der Versorgung der Brennstoffzelle 2 mit reinem Wasserstoff aus der Wasserstoffspeichereinrichtung 7 dabei möglich, mit einem sehr geringen Überschuss an Wasserstoff von lediglich 3 - 5% zu fahren. Dieser Überschuss an Wasserstoff wird dann als Abgas aus dem Anodenbereich 4 abgeführt und gelangt zuluftseitig in die Austauschvorrichtung 12 und hier in den Bereich des katalytischen Materials 13. Es kommt nun zu einer vergleichbaren Umsetzung des Wasserstoffs wie beim Ausführungsbeispiel gemäß Figur 1 bereits beschrieben, mit allen Optionen, die dort bereits genannt wurden.

Der zweite Unterschied des Brennstoffzellensystems 1 der Figur 2 liegt nun darin, dass die Abluft nach der Austauschvorrichtung 12 eine Turbine 16 durchströmt und dabei die in ihr enthaltene Druckenergie sowie insbesondere die hier enthaltene Abwärme zu einem großen Teil an die Turbine 16 abgibt. Die Turbine 16 ist dabei direkt oder mittelbar mit dem Verdichter 6 gekoppelt, so dass die in der Turbine 16 anfallende Energie zum Betreiben des Verdichters 6 genutzt werden kann. Da in den meisten Betriebszuständen die über die Turbine 16 gelieferte Energie nicht ausreichen wird, um den Verdichter 6 zu betreiben, ist dieser zusätzlich mit einer elektrischen Maschine 17 gekoppelt. Über diese elektrische Maschine 17 kann zusätzlich Antriebsenergie für den Verdichter 6 bereitgestellt werden. Sollte es in bestimmten Betriebszuständen zu einem Überschuss an Leistung in der Turbine 16 kommen, so kann die Turbine 16 nicht nur den Verdichter 6 antreiben, sondern treibt in diesem Fall auch die elektrische Maschine 17 als Generator an. Die dann von der elektrischen Maschine 17 erzeugte elektrische Leistung kann in dem Brennstoffzellensystem 1 anderweitig verwendet oder gespeichert werden. Auch dieser Aufbau eines sogenannten elektrischen Turboladers ist aus dem Stand der Technik bei Brennstoffzellensystemen bekannt.

Ein besonderer Vorteil entsteht nun dadurch, dass über die Turbine 16 die in der Abluft befindliche Abwärme genutzt werden kann. Die bisher als sehr problematisch empfundene Erwärmung bei der katalytischen Reaktion von Abgas aus dem Anodenbereich 4 mit Sauerstoff im Zuluftstrom kann mit diesem Aufbau nutzbringend eingesetzt werden, da die auf die Abluft übertragene Wärme nun in der Turbine 16 genutzt und zu mechanischer Energie umgewandelt werden kann.

Der Aufbau des Brennstoffzellensystems 1 gemäß Figur 2 erlaubt somit durch die aktive Nutzung der im Bereich des katalytischen Materials 13 entstehenden Abwärme eine nutzbringend Anwendung derselben. Damit ist nicht mehr, wie beim Stand der Technik, die Menge an Restwasserstoff aus thermischen Gründen beziehungsweise Alterungsgründen oder aus systemtechnischen Gründen eingeschränkt. Zwar ist es sinnvoll möglichst viel Wasserstoff in der Brennstoffzelle 2 umzusetzen, der Aufbau des Brennstoffzellensystems 1 gemäß Figur 2 erlaubt es jedoch, gegebenenfalls auch größere Mengen an Restwasserstoff im Bereich des katalytischen Materials 13 in der Austauschvorrichtung 12 umzusetzen. Dies ermöglicht überhaupt erst einen Verzicht auf die Anodenrezirkulation. Auch kann durch die oben bereits erwähnte optionale Zugabe von Brennstoff über die Dosiereinrichtung 14 und das Leitungselement 15 nun ein gezieltes Betreiben der Turbine 16 mittels der im Bereich des katalytischen Materials 13 entstehenden Abwärme vorgenommen werden. In bestimmten Betriebssituationen kann es durchaus sinnvoll sein, nicht nur aus Gründen der Befeuchtung, sondern auch aus Gründen der für die Turbine 16 benötigten Abwärme in dem Abluftstrom zusätzlichen Wasserstoff in den Bereich des katalytischen Materials 13 in der Austauschvorrichtung 12 einzubringen. Ein Beispiel für eine derartige Situation könnte es sein, dass von der Brennstoffzelle 2 schlagartig eine erhöhte Leistung abgefordert wird, welche eine entsprechend erhöhte Leistung des Verdichters 6 zur Folge hat. In einem solchen Fall könnte über eine Erhöhung der Abwärmemenge in dem Abluftstrom eine größere Leistung an der Turbine 16 bereitgestellt werden, welche zumindest aushilft, die Leistungsanforderung des Verdichters 6 in dieser Situation zu decken. Gleichzeitig entsteht im Bereich der Austauschvorrichtung zusätzlicher Wasserdampf, welcher die Befeuchtung verbessert, und zwar genau dann, wenn ein Leistungspeak von der Brennstoffzelle abgefordert wird, ohne dass bereits eine entsprechend große Menge an feuchter Abluft zur Befeuchtung der Zuluft zur Verfügung steht.

Abschließend soll noch angemerkt werden, dass auch das Brennstoffzellensystem 1 gemäß der Ausgestaltung in Figur 2 über weitere Komponenten verfügen kann, welche allgemein bekannt und üblich sind. Beispielhaft soll hier wieder ein Bypass um die Austauschvorrichtung 12 genannt werden, welcher in analoger Art und Weise zu dem oben beschriebenen Aufbau eingesetzt werden könne. Es kann außerdem ein Wasserabscheider im Bereich zwischen der Austauschvorrichtung 12 und der Turbine 16 in dem Abluftstrom vorgesehen werden, um zu verhindern, dass flüssige Tröpfchen in den Bereich der Turbine 16 gelangen und Komponenten derselben gegebenenfalls schädigen können. Ansonsten lassen sich die beiden Ausführungsformen selbstverständlich durch einen einfachen Austausch von Teilen der beschriebenen Brennstoffzellensysteme untereinander kombinieren. So wäre es beispielsweise denkbar den Aufbau mit der Turbine 16 mit dem Aufbau der Rezirkulationsleitung 9 zu kombinieren. Ebenso wäre es denkbar, in einem Brennstoffzellensystem 1, wie es durch die Figur 2 dargestellt ist, auf die Turbine 16 zu verzichten.

## Patentansprüche

1. Brennstoffzellensystem (1) mit wenigstens einer Brennstoffzelle (2), die einen Kathodenbereich (3) und einen Anodenbereich (4), welche durch Polymerelektrolyt-Membranen (5) voneinander getrennt sind, aufweist, mit einer Austauschvorrichtung (12), welche von einem zum Kathodenbereich (3) strömenden Zuluftstrom einerseits und einem aus dem Kathodenbereich (3) strömenden Abluftstrom andererseits durchströmt ist, und in welcher Wärme vom Zuluftstrom auf den Abluftstrom und gleichzeitig Wasserdampf von dem Abluftstrom auf den Zuluftstrom übergeht, **dadurch gekennzeichnet, dass**
die Austauschvorrichtung (12) zuluftseitig zumindest teilweise ein katalytisches Material (13) aufweist, und dass der Austauschvorrichtung (12) zuluftseitig ein Abgas aus dem Anodenbereich (4) zuführbar ist.

2. Brennstoffzellensystem nach Anspruch 1,
**dadurch gekennzeichnet, dass**
das Abgas aus dem Anodenbereich (4) gesteuert und/oder geregelt zuführbar ist.

3. Brennstoffzellensystem nach Anspruch 1 oder 2,
**dadurch gekennzeichnet, dass**
der Austauschvorrichtung (12) zuluftseitig ein Brennstoff, insbesondere Wasserstoff, zuführbar ist.

4. Brennstoffzellensystem nach Anspruch 1, 2 oder 3,
**dadurch gekennzeichnet, dass**
das katalytische Material (13) in Form einer Beschichtung in die Zuluftseite der Austauschvorrichtung (12) eingebracht ist.

5. Brennstoffzellensystem nach einem der Ansprüche 1 bis 4
**dadurch gekennzeichnet, dass**
die Austauschvorrichtung (12) zumindest teilweise eine Wabenstruktur aufweist.

6. Brennstoffzellensystem nach einem der Ansprüche 1 bis 5,
**dadurch gekennzeichnet, dass**
die Austauschvorrichtung (12) im wesentlichen im Gegenstrom durchströmt ist, wobei das katalytische Material (13) bevorzugt in dem Bereich angeordnet ist, in dem die Zuluft und das Abgas in die Austauschvorrichtung (12) einströmen und in dem die Abluft aus der Austauschvorrichtung (12) ausströmt.

7. Brennstoffzellensystem nach einem der Ansprüche 1 bis 6,
**dadurch gekennzeichnet, dass**
der Anodenbereich (4) von Wasserstoff oder wasserstoffhaltigem Gas durchströmt ist, wobei der Ausgang des Anodenbereichs (4) mit dem zuluftseitigen Eingang der Austauschvorrichtung (12) verbunden ist.

8. Brennstoffzellensystem nach Anspruch 7,
**dadurch gekennzeichnet, dass**
der Anodenbereich (4) aus mehreren hintereinander geschalteten Abschnitten besteht, deren aktive Fläche in Strömungsrichtung des Wasserstoffs oder des wasserstoffhaltigen Gases in dem Anodenbereich (4) jeweils kleiner ist als die aktive Fläche des vorangegangenen Abschnitts.

9. Brennstoffzellensystem nach einem der Ansprüche 1 bis 6,
**dadurch gekennzeichnet, dass**
der Anodenbereich (4) von Wasserstoff durchströmt ist, wobei der Ausgang des Anodenbereichs (4) über eine Rezirkulationsleitung (9) und eine Fördereinrichtung (10) mit dem Eingang des Anodenbereichs (4) verbunden ist, wobei die Rezirkulationsleitung (9) über eine schaltbare Ventileinrichtung (11) mit dem zuluftseitigen Eingang der Austauschvorrichtung (12) verbunden ist.

10. Brennstoffzellensystem nach einem der Ansprüche 1 bis 9,
**dadurch gekennzeichnet, dass**
die Zuluft über einen stromaufwärts der Austauschvorrichtung (12) angeordneten Verdichter (6) gefördert ist, wobei der Verdichter (6) zumindest unterstützend durch eine Turbine (16) antreibbar ist, welche von der Abluft stromabwärts der Austauschvorrichtung (12) durchströmt ist.

11. Brennstoffzellensystem nach Anspruch 10,
**dadurch gekennzeichnet, dass**
der Verdichter (6) von einer elektrischen Maschine (17) antreibbar ist, wobei bei Leistungsüberschuss an der Turbine (16) die Turbine (16) die elektrische Maschine (17) generatorisch zur Erzeugung von elektrischer Leistung antreibt.

12. Verwendung einer Vorrichtung nach einem der Ansprüche 1 bis 11,
in einem Fortbewegungsmittel zur Erzeugung von elektrischer Leistung für den Antrieb und/oder elektrische Nebenverbraucher des Fortbewegungsmittels.

## Claims

1. Fuel cell system (1) comprising at least one fuel cell (2) having a cathode region (3) and an anode region (4) which are separated from one another by polymer electrolyte membranes (5) and further comprising an exchange device (12) through which flow a supply air stream flowing to the cathode region (3) on the one hand and a discharge air stream flowing from the cathode region (3) on the other hand and in which heat is transferred from the supply air stream to the discharge air stream while water vapour is simultaneously transferred from the discharge air stream to the supply air stream,
**characterised in that**
the exchange device (12) at least partially comprises a catalytic material (13) on the supply air side, and **in that** an exhaust gas from the anode region (4) can be fed to the exchange device (12) on the supply air side.

2. Fuel cell system according to claim 1,
**characterised in that**
the exhaust gas from the anode region (4) can be fed in under open- and/or closed-loop control.

3. Fuel cell system according to claim 1 or 2,
**characterised in that**
a fuel, in particular hydrogen, can be fed to the exchange device (12) on the supply air side.

4. Fuel cell system according to claim 1, 2 or 3,
**characterised in that**
the catalytic material (13) is introduced into the supply air side of the exchange device (12) in the form of a coating.

5. Fuel cell system according to any of claims 1 to 4,
**characterised in that**
the exchange device (12) has a honeycomb structure at least in some parts.

6. Fuel cell system according to any of claims 1 to 5,
**characterised in that**
the flow through the exchange device (12) is substantially a countercurrent flow, the catalytic material (13) being preferably located in the region where the supply air and the exhaust gas enter the exchange device (12) and where the exhaust air is discharged from the exchange device (12).

7. Fuel cell system according to any of claims 1 to 6,
**characterised in that**
hydrogen or a hydrogen-containing gas flows through the anode region (4), the outlet of the anode region (4) being connected to the supply air side inlet of the exchange device (12).

8. Fuel cell system according to claim 7,
**characterised in that**
the anode region (4) comprises a plurality of sections connected one behind the other, the active surface of which in the direction of flow of the hydrogen or hydrogen-containing gas in the anode region (4) is in each case smaller than the active surface of the preceding section.

9. Fuel cell system according to any of claims 1 to 6,
**characterised in that**
hydrogen flows through the anode region (4), an outlet of the anode region (4) being connected to the inlet of the anode region (4) via a recirculation line (9) and a conveying device (10), the recirculation line (9) being connected to the supply air side inlet of the exchange device (12) via a switchable valve device (11).

10. Fuel cell system according to any of claims 1 to 9,
**characterised in that**
the supply air is conveyed via a compressor (6) located upstream of the exchange device (12), wherein the compressor (6) can at least in support be driven by a turbine (16) through which the exhaust air flows downstream of the exchange device (12).

11. Fuel cell system according to claim 10,
**characterised in that**
the compressor (6) can be driven by an electric machine (17), wherein, if there is excess power at the turbine (16), the turbine (16) drives the electric machine (17) in a generator mode for the generation of electric power.

12. Use of a device according to any of claims 1 to 11,
in a locomotion means for the generation of electric power for the drive and/or for electric ancillary loads of the locomotion means.

## Revendications

1. Système de pile à combustible (1) comportant au moins une pile à combustible (2) laquelle présente une partie cathodique (3) et une partie anodique (4), lesquelles sont séparées l'une de l'autre par des membranes (5) électrolytiques en polymère, et un dispositif d'échange (12), qui est parcouru, d'une part, par un flux d'air entrant s'écoulant vers la partie cathodique (3) et, d'autre part, par un flux d'air sortant provenant de la partie cathodique (3), dans ledit dispositif d'échange la chaleur est transférée du flux d'air entrant au flux d'air sortant, la vapeur d'eau étant simultanément transférée du flux d'air sortant au flux d'air entrant, **caractérisé en ce que** le dispositif d'échange (12) est doté au moins partiellement d'un matériau catalytique (13) et **en ce qu'**un gaz sortant de la partie anodique (4) peut être amené au dispositif d'échange (12), côté entrant.

2. Système de pile à combustible selon la revendication 1, **caractérisé en ce que** l'alimentation du gaz sortant de la partie anodique (4) est réglée et/ou commandée.

3. Système à pile combustible selon la revendication 1 ou la revendication 2, **caractérisé en ce qu'**un combustible, en particulier de l'hydrogène, peut être amené au dispositif d'échange (12), côté entrant.

4. Système de piles à combustible selon les revendications 1, 2 ou 3, **caractérisé en ce que** le matériau catalytique (13) est introduit sous forme d'une couche dans le côté entrant du dispositif d'échange (12).

5. Système de pile à combustible selon l'une quelconque des revendications 1 à 4, **caractérisé en ce que** le dispositif d'échange (12) présente au moins partiellement d'une structure en nid d'abeilles (12).

6. Système de pile à combustible selon l'une quelconque des revendications précédentes 1 à 5, **caractérisé en ce que** le dispositif d'échange (12) est parcouru à contre-courant, le matériau catalytique (13) étant de préférence disposé dans la région où l'air entrant et le gaz pénètrent dans le dispositif d'échange (12) et où l'air sortant s'écoule du dispositif d'échange (12).

7. Système de pile à combustible selon l'une quelconque des revendications 1 à 6, **caractérisé en ce que** la partie anodique (4) est parcourue par l'hydrogène ou par un gaz contenant de l'hydrogène, la sortie de la partie anodique (4) étant reliée à l'entrée du dispositif d'échange (12), côté entrant.

8. Système de pile à combustible selon la revendication 7, **caractérisé en ce que** la partie anodique (4) comprend plusieurs sections couplées les derrière les autres dont la surface active dans le sens de l'écoulement de l'hydrogène ou du gaz contenant de l'hydrogène est à chaque fois inférieure dans la partie anodique (4) que la surface active de la section précédente.

9. Système de pile à combustible selon l'une quelconque des revendications 1 à 6, **caractérisé en ce que** la partie anodique (4) est parcourue par l'hydrogène, la sortie de la partie anodique (4) étant reliée par une conduite de recirculation (9) et un dispositif de transport (10) étant relié à l'entrée de la partie anodique (4), la conduite de recirculation (9) étant reliée par un dispositif de soupape (11) commutable à l'entrée du dispositif d'échange (12), côté entrant.

10. Système de pile à combustible selon l'une quelconque des revendications 1 à 9, **caractérisé en ce que** l'air entrant est acheminé par un compresseur (6) disposé en amont du dispositif d'échange (12), le compresseur (6) pouvant être entraîné au moins en plus par une turbine (16) laquelle est parcourue par l'air sortant en aval du dispositif d'échange (12).

11. Système de pile à combustible selon la revendication 10, **caractérisé en ce que** le compresseur (6) peut être entraîné par une machine électrique (17) en cas de puissance excédentaire de la turbine (16) la turbine (16) entraîne la machine électrique (17) au moyen d'un générateur permettant de produire de l'énergie électrique.

12. Utilisation d'un dispositif selon l'une quelconque des revendications 1 à 11, dans un moyen de locomotion permettant de produire de l'énergie électrique pour l'entraînement et/ou du consommateur auxiliaire électrique du moyen de locomotion.
